# NEUE EUROPÄISCHE PATENTSCHRIFT

(11) **EP 2 590 036 B2**
(45) Veröffentlichungstag und Bekanntmachung des Hinweises auf die Entscheidung über den Einspruch: **01.11.2017**
(45) Hinweis auf die Patenterteilung: 19.03.2014
(21) Anmeldenummer: 12188469.6
(22) Anmeldetag: 15.10.2012
(51) Int. Cl.: G05B 9/02, G05B 19/042

(54) **Sicherheitsschaltgerät**
Safety switching device
Appareil de commutation de sécurité

(30) Priorität: 04.11.2011 DE 102011117615
(43) Veröffentlichungstag der Anmeldung: 08.05.2013
(73) Patentinhaber: Wieland Electric GmbH, 96052 Bamberg (DE)
(72) Erfinder: Kirner, Peter, 12165 Berlin (DE); Lindner, Andreas, 14656 Brieselang (DE)
(74) Vertreter: Cornelius, Thomas

(56) Entgegenhaltungen:
- EP-A1- 1 847 891
- EP-B1- 1 269 274
- EP-B1- 2 309 351
- DE-A1- 3 907 432
- DE-A1- 10 013 273
- DE-A1- 19 707 241
- DE-A1-102007 056 519
- "PSS 3000 - Programmierbare Sicherheitssteuerung" der Firma Pilz GmbH & Co., Ausgabe 5, mit Druckdatum Oktober 1996
- "Betriebsanleitung - Sicherheits -Kleinsteuerung UE 440/UE470" der Firma SICK AG, mit Druckdatum 14. März 2005
- "Betriebsanleitung - Busknoten UE 4100 PRROFIsafe" der Firma SICK AG, mit Druckdatum 13. Januar 2003
- "Betriebsanleitung - Funktionspaket UE 4100 für I/O" der Firma SICK AG, mit Druckdatum 17. November 2003

## Beschreibung

Die Erfindung betrifft ein Sicherheitsschaltgerät, ausgelegt zum gemäß einer Sicherheitsvorschrift sicheren Ein- und Ausschalten eines elektrischen Verbrauchers mit einer Anzahl von Eingangs- und Ausgangsklemmen zum Anschluss der Arbeitskontakte eines Sicherheitsschaltelements und mit einer Anzahl von Schaltausgängen zur Steuerung der Stromzufuhr des elektrischen Verbrauchers, wobei das Sicherheitsschaltelement jeweils einen einen sicheren Betriebszustand und einen einen nicht sicheren Betriebszustand anzeigenden Schaltzustand hat, und wobei das Sicherheitsschaltgerät für den Betrieb in einer Mehrzahl von vorbestimmten Betriebsmodi ausgelegt ist.

Sicherheitsschaltgeräte werden vor allem im industriellen Bereich verwendet, um elektrische Verbraucher sicher ein- und auszuschalten, die Gefahrenpotential für Mensch und Material bergen. Derartige elektrische Verbraucher sind z.B. Pressen, Fräswerkzeuge etc. Hierzu wird die Stromversorgung für den elektrischen Verbraucher über Schaltausgänge des Sicherheitsschaltgeräts gesteuert, die zur Erfüllung der einschlägigen Sicherheitsvorschriften und -zertifizierungen typischerweise redundant ausgestaltet sind, z.B. über zwei in Reihe geschaltete Relais, die von getrennten Stromkreisen gesteuert werden. Ein derartiges Sicherheitsschaltgerät ist beispielsweise aus der EP 1 847 891 A1 bekannt. Sicherheitsschaltgeräte weisen üblicherweise eine Anzahl von Eingangs- und Ausgangsklemmen zum Anschluss der Arbeitskontakte eines Sicherheitsschaltelements auf. Das Sicherheitsschaltelement kann z.B. ein Not-Aus-Schalter sein, eine Positions- oder Stellungsüberwachung z.B. einer Schutztür, eine Lichtschranke, eine Schaltmatte etc. Das Sicherheitsschaltelement hat dabei üblicherweise eine je nach Anwendung zu bestimmende Stellung "sicher", z.B. Lichtschranke nicht unterbrochen, d.h. keine Person im Gefahrenbereich, und eine Stellung "nicht sicher", z.B. Schutztürposition offen, d.h. Gefahr. Typischerweise soll die Stromzufuhr zu dem elektrischen Verbraucher dann unterbrochen werden, wenn das Sicherheitsschaltelement nicht mehr in der Position "sicher" ist.

Je nach Art des Sicherheitsschaltelements ist es möglich, seitens des Sicherheitsschaltgerätes verschiedene Funktionsüberprüfungen durchzuführen. Z.B. kann auch der Schaltmechanismus des Sicherheitsschaltelements redundant ausgeführt sein, so dass hier zwei Eingangsklemmen des Sicherheitsschaltgeräts angesteuert werden, die dann auch separat auf die schaltausgangsseitigen redundanten Schaltkreise wirken können. Dabei können diese äquivalent ausgeführt sein, d.h. in jeweils einer Stellung des Sicherheitsschaltelements haben die dort eingebauten redundanten Schalter denselben Schaltzustand, oder antivalent, d.h. in einer Stellung des Sicherheitsschaltelements ist ein Schalter geschlossen, der redundante Schalter offen. Dadurch können z.B. Kurzschlüsse zwischen den beiden redundanten Schaltkreisen erkannt werden.

Ist das Sicherheitsschaltelement so ausgelegt, dass es in Reihe zwischen die Eingangs- und Ausgangsklemmen des Sicherheitsschaltgeräts geschaltet werden kann, kann auch eine Funktionsüberprüfung des jeweiligen Schaltkreises des Sicherheitsschaltelements erfolgen. Dies ist durch entsprechende Prüfsignale möglich, die das Sicherheitsschaltgerät über die Ausgangsklemmen zyklisch oder auf einen Trigger hin ausgibt. Das Sicherheitsschaltgerät prüft dann, ob dieses Prüfsignal auch an der entsprechenden Eingangsklemme anliegt.

Es ist allgemein wünschenswert, dass ein Sicherheitsschaltgerät mit möglichst vielen der beschriebenen vielfältigen Ausgestaltungsmöglichkeiten von Sicherheitsschaltelementen zusammenwirken kann, so dass das Sicherheitsschaltgerät universell einsetzbar ist. Hierzu weist das Sicherheitsschaltgerät üblicherweise eine Mehrzahl von Betriebsmodi auf, die auf die verschiedenen Sicherheitsschaltelemente angepasst sind und die entsprechenden Ein- und Ausgangsklemmen korrekt beschalten und die korrekte Funktionsweise z.B. eines im Sicherheitsschaltgerät enthaltenen Mikrocontrollers auswählen.

Häufig ist es hierfür jedoch erforderlich, zusätzliche Klemmten oder ein manuelles Bedienelement wie einen Einstellschalter zur Vorgabe des Betriebsmodus am Sicherheitsschaltgerät vorzusehen. Durch die höhere technische Komplexität steigen dadurch jedoch die Kosten des Geräts und es erhöht sich die Wahrscheinlichkeit von Anschluss- oder Bedienfehlern.

EP 2 309 351 A1 mit der Bezeichnung: "Sicherheitssteuerung" beschreibt ein Sicherheitsschaltgerät, welches eine Betriebsarteneinstelleinheit aufweist, die die Betriebsart der Sicherheitssteuerung einstellt. Dabei weist die Betriebsarteneinstelleinheit eine Eingangssignalerkennungseinheit auf, mit der die Betriebsarteneinstelleinheit erkennen kann, welche Art Signalgeber mit den Anschlüssen verbunden ist oder sind.

Der Erfindung liegt daher die Aufgabe zugrunde, ein Sicherheitsschaltgerät der eingangs genannten Art anzugeben, welches für das Zusammenwirken mit einer großen Vielfalt von Sicherheitsschaltelementen geeignet ist, gleichzeitig technisch besonders einfach ausgestaltet ist und die Wahrscheinlichkeit von Bedienfehlern minimiert.

Diese Aufgabe wird erfindungsgemäß dadurch gelöst, dass zunächst das Sicherheitsschaltgerät derart ausgelegt ist, dass einem Teil der Betriebsmodi in jedem Schaltzustand des jeweils angeschlossenen Sicherheitsschaltelements jeweils eine eineindeutige Kombination einer an einer Mehrzahl der Eingangsklemmen anliegenden, vorbestimmten Prüfsignalform zugeordnet ist. Gerade bei Betriebsmodi für Sicherheitsschaltelemente, die eine Leitungsüberprüfung erlauben, ermöglicht dies eine Einstellung des Betriebsmodus allein über die Kombination der Prüfsignalformen, d.h. über einen entsprechenden Anschluss der Eingangsklemmen, bei gleichzeitiger Überprüfung zumindest eines Leitungsweges. Betriebsmodi für Sicherheitsschaltelemente, die keine Überprüfung erlauben, können dann unter Nutzung der übrigen Eingangsklemmen konfiguriert werden.

Weiterhin umfasst dabei die besagte Mehrzahl der Eingangsklemmen zwei Eingangsklemmen, die jeweils einem Schaltkreis zugeordnet sind, wobei die beiden Schaltkreise redundant auf einen Schaltausgang wirken, und wobei das Anliegen der Prüfsignalform an nur der ersten der zwei Eingangsklemmen einem äquivalenten Betriebsmodus zugeordnet ist. In vorteilhafter Ausgestaltung ist dabei das Anliegen der Prüfsignalform an nur der zweiten der zwei Eingangsklemmen einem antivalenten Betriebsmodus zugeordnet. Eine derartige Konfiguration ist z.B. dadurch erreichbar, dass das Sicherheitsschaltgerät z.B. eine Gleichspannung und eine Prüfsignalform an jeweils einer Ausgangsklemme zur Verfügung stellt. Jeweils eine dieser Klemmen wird dann in einen der redundanten Schaltkreise des Sicherheitsschaltelements geschaltet. Da nur einer der beiden Schaltkreise die Prüfsignalform führt, ist eine einfache Unterscheidung der ko- und antivalenten Varianten durch entsprechende Zuordnung einer Eingangsklemme zur Prüfsignalform und der anderen Eingangsklemme zur Gleichspannung oder Erde möglich. Somit ergibt sich eine eindeutige Zuordnung des spezifischen Betriebsmodus zur Signalkombination und somit eine einfache Konfiguration über den Anschluss.

Um die genannten äqui- und antivalenten Betriebsmodi für redundante Sicherheitsschaltelemente von anderen Betriebsmodi zu unterscheiden, umfasst die genannte Mehrzahl der Eingangsklemmen darüber hinaus eine weitere Eingangsklemme, wobei das Sicherheitsschaltgerät derart ausgelegt ist, dass das Anliegen der Prüfsignalform an nur einer der zwei Eingangsklemmen nur in Verbindung mit dem Anliegen einer ersten vorbestimmten Signalform an der weiteren Eingangsklemme einem Betriebsmodus zugeordnet ist. So kann z.B: die erste vorbestimmte Signalform als Erde festgelegt werden, d.h. spannungsfrei. Nur bei Spannungsfreiheit der weiteren Eingangsklemme wird dann die beschriebene redundante Betriebsweise mit einer Prüfsignalform als Betriebsmodus für äqui- oder antivalente Sicherheitsschaltelemente erkannt. Liegt sie nicht vor, so wird ein Fehler erkannt.

In weiterer vorteilhafter Ausgestaltung ist das Sicherheitsschaltgerät derart ausgelegt ist, dass das Anliegen der Prüfsignalform an beiden der zwei Eingangsklemmen nur in Verbindung mit dem Anliegen einer zweiten, von der ersten Signalform unterschiedlichen, vorbestimmten Signalform an der weiteren Eingangsklemme einem Betriebsmodus zugeordnet ist. Hierdurch können z.B. Betriebsmodi für Sicherheitsschaltelemente identifiziert werden, die nicht redundant, aber überprüfbar sind. Die Prüfsignalform wird dann in beide der zwei Eingangsklemmen über das Sicherheitsschaltelement geschaltet. Als einer der Identifikatoren für diese Betriebsmodi kann dann an der weiteren Eingangsklemme z.B. eine definierte Gleichspannung gewählt werden, so dass zusammen mit bestimmten Eingangssignalen an den anderen Eingangsklemmen eine eindeutige Identifikation möglich ist.

Auch hier ist in vorteilhafter Ausgestaltung dabei die eineindeutige Kombination der Prüfsignalform jeweils dem den sicheren Betriebszustand anzeigenden Schaltzustand des Sicherheitsschaltelements zugeordnet. Wie beschrieben sind nämlich häufig im "nicht sicheren" Schaltzustand Leitungswege im Sicherheitsschaltelement unterbrochen, so dass hier einerseits überhaupt keine Überprüfung des Leitungsweges möglich ist, andererseits im Kombinationsbild keine Unterscheidung mehr zwischen z.B. +24 V und Prüfsignalform mehr erlaubt. Daher kann es auch hier von Vorteil sein, die Prüfsignalformen jeweils nur den "sicheren" Schaltzuständen zuzuordnen.

Zur Identifikation von Betriebsmodi für Sicherheitsschaltelemente, die weder Überprüfungen erlauben, noch redundant sind, ist das Sicherheitsschaltgerät schließlich vorteilhafterweise derart ausgelegt, dass das Anliegen der Prüfsignalform an keiner der zwei Eingangsklemme nur in Verbindung mit dem Anliegen der Prüfsignalform an der weiteren Eingangsklemme einem Betriebsmodus zugeordnet ist. Bei derartigen Sicherheitsschaltelementen können nämlich keine Prüfsignalformen durchgeleitet werden. Daher kann eine eineindeutige Zuordnung erreicht werden, indem die Prüfsignalform an der weiteren Eingangsklemme aufgeschaltet wird und mit entsprechenden Kombinationen an den übrigen Klemmen verknüpft wird.. Somit wird wiederum eine Betriebsmodusauswahl allein durch die Verkabelung der Ein- und Ausgangsklemmen mit dem Sicherheitsschaltelement ermöglicht.

In vorteilhafter Ausgestalgung weist die Prüfsignalform eine Pulsform auf. Diese kann sowohl zyklisch als auch auf einen Trigger, z.B. eine Prüfanfrage hin ausgegeben werden. Die Pulsform kann sowohl ein Gleichstrompuls über einem Nullsignal sein, als auch ein Nullpuls über einem Gleichstromsignal. Ist der Puls kurz genug gewählt, kann das Signal auch direkt auf z.B. ein Relais aufgeschaltet werden, ohne dass dieses aufgrund eigener Trägheit seinen Schaltzustand ändert.

Die mit der Erfindung erzielten Vorteile bestehen insbesondere darin, dass durch die eineindeutige Zuordnung von Eingangsklemmensignalformen zu Betriebsmodi und Schaltzuständen eine Konfiguration des Betriebsmodus allein durch entsprechenden Anschluss der Klemmen erreicht wird. Zusätzliche Benutzer- oder Konfigurationsschnittstellen oder separate Klemmen zur Konfiguration können entfallen. Dadurch werden die Anzahl der Klemmen und damit die technische Komplexität und die Kosten reduziert, gleichzeitig ist das Sicherheitsschaltgerät mit einer Vielzahl verschiedener Sicherheitsschaltelemente kompatibel. Weiterhin ist ein besonders sicherer Betrieb in jedem Betriebsmodus gewährleistet.

Die Erfindung wird anhand einer Zeichnung näher erläutert. Darin zeigen:
FIG 1 eine schematische Darstellung eines Sicherheitsschaltgeräts,
FIG 2 eine schematische Darstellung des Sicherheitsschaltgeräts aus FIG 1 in einem Betriebsmodus mit einem äquivalenten, redundanten Schalter,
FIG 3 eine schematische Darstellung des Sicherheitsschaltgeräts aus FIG 1 in einem Betriebsmodus mit einem antivalenten, redundanten Schalter,
FIG 4 eine schematische Darstellung des Sicherheitsschaltgeräts aus FIG 1 in einem Betriebsmodus mit einem überprüfbaren, nicht redundanten Schalter, und
FIG 5 eine schematische Darstellung des Sicherheitsschaltgeräts aus FIG 1 in einem Betriebsmodus mit einem nicht überprüfbaren, nicht redundanten Schalter. Gleiche Teile sind in allen FIGs mit denselben Bezugszeichen versehen.

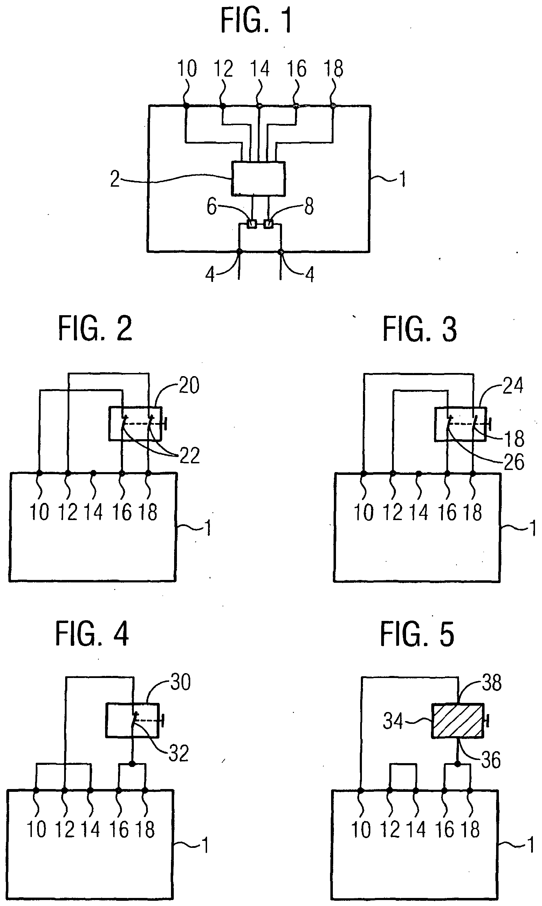

Die FIG 1 zeigt ein Sicherheitsschaltgerät 1 mit einer zentralen Steuereinheit 2. Die Steuereinheit 2 ist im Ausführungsbeispiel als Mikrocontroller ausgestaltet. Das Sicherheitsschaltgerät hat zwei Schaltausgänge 4, die in die Stromzufuhr zu einem nicht näher gezeigten elektrischen Verbraucher eingeschaltet sind, der Gefahrenpotential aufweist und daher sicher ausgeschaltet werden soll. Dazu sind in die Verbindung zwischen den Schaltausgängen 4 zwei Relais 6, 8 in Reihe geschaltet. Um den Stromfluss zu erhalten, müssen beide Relais 6, 8 im geschlossenen Zustand sein, sie sind also redundant. Die Relais 6, 8 werden von der Steuereinheit 2 gesteuert.

Um die Funktion des elektrischen Verbrauchers im Gefahrenfall zu unterbrechen oder zumindest zu beeinflussen, sind verschiedene, in den folgenden FIGs, jedoch nicht in der FIG 1 gezeigte Sicherheitsschaltelemente an das Sicherheitsschaltgerät 1 anschließbar. Diese können z.B. Not-Aus-Schalter, Lichtschranken, Türpositionsschalter etc. sein. Zum Anschluss dieser Sicherheitsschaltelemente weist das Sicherheitsschaltgerät zwei Ausgangsklemmen 10, 12 und drei Eingangsklemmen 14, 16, 18 auf. An Ausgangsklemme 10 liegt im Ausführungsbeispiel stets eine Gleichspannung von +24 Volt an, an Ausgangsklemme 12 ein Prüfsignal mit zyklischen, pulsartigen Prüfpulsen, die jeweils für eine kurze Dauer 0 Volt über einer sonst erhaltenen Grundspannung von +24 Volt messen. Die Prüfpulse können alternativ auch auf einen Trigger wie z.B. eine manuelle oder automatische veranlasste Prüfanfrage hin abgegeben werden. Um nun bei der gezeigten geringen Anzahl von nur fünf Klemmen eine möglichst große Anzahl von Betriebsmodi besonders sicher betreiben zu können, ist das Sicherheitsschaltgerät 1 gemäß dem Ausführungsbeispiel so ausgelegt, dass jedem Betriebsmodus in jedem Schaltzustand des jeweils angeschlossenen Sicherheitsschaltelements eine eineindeutige Kombination von Signalformen bzw. Prüfsignalformen zugeordnet ist. Dies wird in den FIG 2-5 erläutert, die jeweils unterschiedliche Betriebsmodi zeigen, jeweils im "sicheren" Zustand. Dabei wird in FIG 2-5 aus Gründen der Übersichtlichkeit auf die Darstellung sämtlicher Teile des Sicherheitsschaltgeräts 1 außer der Klemmen 10, 12, 14, 16, 18 verzichtet.

FIG 2 zeigt eine Anwendung mit einem Sicherheitsschaltelement 20, das zwei redundante Kanäle mit zwei mechanisch verbundenen Schaltern 22 umfasst. Die Schalter 22 sind äquivalent, d.h. beide im "sicheren" Zustand geschlossen und im "nicht sicheren" Zustand geöffnet. Hier ist das Sicherheitsschaltelement 20 derart mit dem Sicherheitsschaltgerät 1 verbunden dass Ausgangsklemme 10 über den einen der Schalter 22 mit Eingangsklemme 16 verbunden ist, Ausgangsklemme 12 über den anderen der Schalter 22 mit Eingangsklemme 18. Eingangsklemme 14 bleibt unbelegt. Auf den Eingangsklemmen 14, 16, 18 ergibt sich im "sicheren" Zustand somit die Signalkombination Null, +24 V, Prüfpuls, im "nicht sicheren" Zustand die Signalkombination Null, Null, Null.

FIG 3 zeigt eine Anwendung mit einem Sicherheitsschaltelement 24, das zwei redundante Kanäle mit zwei mechanisch verbundenen Schaltern 26, 28 umfasst. Die Schalter 26, 28 sind hier jedoch antivalent, d.h. im "sicheren" Zustand ist Schalter 26 geschlossen und Schalter 28 geöffnet. Im "nicht sicheren" Zustand ist Schalter 26 geöffnet und Schalter 28 geschlossen. Hier ist das Sicherheitsschaltelement 24 derart mit dem Sicherheitsschaltgerät 1 verbunden dass Ausgangsklemme 10 über Schalter 28 mit Eingangsklemme 18 verbunden ist, Ausgangsklemme 12 über Schalter 26 mit Eingangsklemme 16. Eingangsklemme 14 bleibt wieder unbelegt. Auf den Eingangsklemmen 14, 16, 18 ergibt sich im "sicheren" Zustand somit die Signalkombination Null, Prüfpuls, Null, im "nicht sicheren" Zustand die Signalkombination Null, Null, +24 V.

Bereits hier zeigt sich, dass die Kombination der Prüfpulse festlegt, ob es sich um einen Betriebsmodus für äquivalente oder antivalente Sicherheitsschaltgeräte 20, 24 handelt, wobei die Prüfpulse nur im "sicheren" Zustand anliegen. Auch im "nicht sicheren" Zustand sind beide Betriebsmodi jedoch zu unterscheiden. Für einen besonders sicheren Betrieb sind die beiden an den Eingangsklemmen 16 und 18 anliegenden Signale jeweils einem der Relais 6, 8 zugeordnet. Dadurch ergibt sich eine durchgehende Redundanz.

FIG 4 zeigt nun eine weitere Anwendung mit einem Sicherheitsschaltelement 30 mit einem einzelnen Schalter 32, also ohne Redundanz. Allerdings erlaubt das Sicherheitsschaltelement 30 eine Durchleitung von Prüfpulsen, z.B. könnte hier eine entsprechend geeignete Lichtschranke vorhanden sein, die jedoch in FIG 4 vereinfachend als Schalter dargestellt ist. Hier ist das Sicherheitsschaltelement 30 derart mit dem Sicherheitsschaltgerät 1 verbunden, dass Ausgangsklemme 10 mit Eingangsklemme 14 verbunden ist, Ausgangsklemme 12 über Schalter 32 mit Eingangsklemmen 16 und 18. Auf den Eingangsklemmen 14, 16, 18 ergibt sich im "sicheren" Zustand somit die Signalkombination +24 V, Prüfpuls, Prüfpuls, im "nicht sicheren" Zustand die Signalkombination +24 V, Null, Null.

FIG 5 zeigt nun eine weitere optionale Anwendung mit einem Sicherheitsschaltelement 34, dass nur einen Ausgang 36 und einen Eingang 38 hat und keine Durchleitung von Prüfpulsen erlaubt. Beispielsweise könnte es sich um eine eigene, mit einem Mikrocontroller versehene Schalteinheit handeln, die lediglich ein +24 V Signal am Eingang 38 im "sicheren" Zustand weiterleitet oder aber ohne Bezug auf den Eingang 38 im "sicheren" Zustand ein +24 V Signal am Ausgang 36 ausgibt. Hier ist das Sicherheitsschaltelement 34 derart mit dem Sicherheitsschaltgerät 1 verbunden, dass Ausgangsklemme 12 mit Eingangsklemme 14 verbunden ist, Ausgangsklemme 10 mit Eingang 38 und Ausgang 36 mit Eingangsklemmen 16 und 18. Auf den Eingangsklemmen 14, 16, 18 ergibt sich im "sicheren" Zustand somit die Signalkombination Prüfpuls, +24 V, +24 V, im "nicht sicheren" Zustand die Signalkombination Prüfpuls, Null, Null.

Wie das Ausführungsbeispiel zeigt, ergibt sich so für jeden der vier in den FIGs 2-5 gezeigten Betriebsmodi sowohl im "sicheren" als auch "nicht sicheren" Zustand ein unterschiedliches Kombinationsbild von Signalen an den Eingangsklemmen 14, 16, 18. Damit ist jede Kombination eineindeutig einem Betriebsmodus und einem Schaltzustand zuordbar, oder aber einem Fehler zuzuordnen. Dadurch ergibt sich eine automatische Einstellung des Betriebsmodus der Steuereinheit 2 allein durch die Kombination an den drei Eingangsklemmen 14, 16, 18, d.h. die Art des Anschlusses ohne externe Programmierung oder ähnliches.

## Patentansprüche

1. Sicherheitsschaltgerät (1), ausgelegt zum gemäß einer Sicherheitsvorschrift sicheren Ein- und Ausschalten eines elektrischen Verbrauchers, mit einer Anzahl von Eingangs- und Ausgangsklemmen (10, 12, 14, 16, 18) zum Anschluss der Arbeitskontakte eines Sicherheitsschaltelements (20, 24, 30, 34) und mit einer Anzahl von Schaltausgängen (4) zur Steuerung der Stromzufuhr des elektrischen Verbrauchers, wobei das Sicherheitsschaltelement (20, 24, 30, 34) jeweils einen je nach Anwendung zu bestimmenden, einen sicheren Betriebszustand anzeigenden Schaltzustand und einen einen nicht sicheren Betriebszustand anzeigenden Schaltzustand hat, und wobei das Sicherheitsschaltgerät (1) für den Betrieb in einer Mehrzahl von vorbestimmten Betriebsmodi ausgelegt ist, **dadurch gekennzeichnet, dass** das Sicherheitsschaltgerät (1) derart ausgelegt ist, dass einem Teil der Betriebsmodi in jedem Schaltzustand des jeweils angeschlossenen Sicherheitsschaltelements jeweils eine eineindeutige Kombination einer an einer Mehrzahl der Eingangsklemmen (14, 16, 18) anliegenden, vorbestimmten Prüfsignalform zugeordnet ist,
wobei die Mehrzahl der Eingangsklemmen (14, 16, 18) zwei Eingangsklemmen (16, 18) umfasst, die jeweils einem Schaltkreis zugeordnet sind, wobei die beiden Schaltkreise redundant auf einen Schaltausgang wirken, und wobei das Anliegen der Prüfsignalform an nur der ersten der zwei Eingangsklemmen (18) einem äquivalenten Betriebsmodus zugeordnet ist,
wobei die Mehrzahl der Eingangsklemmen (14, 16, 18) eine weitere Eingangsklemme (14) umfasst, und wobei das Sicherheitsschaltgerät (1) derart ausgelegt ist, dass das Anliegen der Prüfsignalform an nur einer der zwei Eingangsklemmen (16, 18) nur in Verbindung mit dem Anliegen einer ersten vorbestimmten Signalform an der weiteren Eingangsklemme (14) einem Betriebsmodus zugeordnet ist.

2. Sicherheitsschaltgerät (1) nach Anspruch 1, bei dem das Anliegen der Prüfsignalform an nur der zweiten der zwei Eingangsklemmen (16) einem antivalenten Betriebsmodus zugeordnet ist.

3. Sicherheitsschaltgerät (1) nach Anspruch 1, das derart ausgelegt ist, dass das Anliegen der Prüfsignalform an beiden der zwei Eingangsklemmen (16, 18) nur in Verbindung mit dem Anliegen einer zweiten, von der ersten Signalform unterschiedlichen, vorbestimmten Signalform an der weiteren Eingangsklemme (14) einem Betriebsmodus zugeordnet ist.

4. Sicherheitsschaltgerät (1) nach einem der Ansprüche 1 bis 3, bei dem die eineindeutige Kombination der Prüfsignalform jeweils dem den sicheren Betriebszustand anzeigenden Schaltzustand des Sicherheitsschaltelements (20, 24, 30, 34) zugeordnet ist.

5. Sicherheitsschaltgerät (1) nach Anspruch 4, das derart ausgelegt ist, dass das Anliegen der Prüfsignalform an keiner der zwei Eingangsklemmen (16, 18) nur in Verbindung mit dem Anliegen der Prüfsignalform an der weiteren Eingangsklemme (14) einem Betriebsmodus zugeordnet ist.

6. Sicherheitsschaltgerät (1) nach einem der Ansprüche 1 bis 5, bei dem die Prüfsignalform eine Pulsform aufweist.

## Claims

1. Safety switching device (1), designed to switch on and switch off an electrical load according to a safety provision, comprising a plurality of input and output terminals (10, 12, 14, 16, 18) for connecting the make contacts of a safety switching element (20, 24, 30, 34), and comprising a plurality of switch outputs (4) for controlling the power supply to the electrical load, the safety switching element (20, 24, 30, 34) having in each case a switching state which is to be specified depending on the application and which indicates a safe operating state, and a switching state indicating an unsafe switching state, and the safety switching device (1) being designed for operation in a plurality of predefined operating modes, **characterised in that** the safety switching device (1) is designed such that, in each case, a one-to-one combination of a predefined test waveform that is applied to a plurality of input terminals (14, 16, 18) is associated with some of the operating modes in each switching state of the safety switching element connected in each case, the plurality of input terminals (14, 16, 18) comprising two input terminals (16, 18) that are each associated with one circuit, respectively, the two circuits acting in a redundant manner on one switch output, and the application of the test waveform to only the first of the two input terminals (18) being associated with an equivalent operating mode, the plurality of input terminals (14, 16, 18) comprising an additional input terminal (14), and the safety switching device (1) being designed such that the application of the test waveform to only one of the two input terminals (16, 18) being associated with an operating mode only in conjunction with the application of a first predefined waveform to the additional input terminal (14).

2. Safety switching device (1) according to claim 1, wherein the application of the test waveform to only the second of the two input terminals (16) is associated with a non-equivalent operating mode.

3. Safety switching device (1) according to claim 1, which is designed such that the application of the test waveform to both of the two input terminals (16, 18) is associated with an operating mode only in conjunction with the application of a second predefined waveform, different from the first waveform, to the additional input terminal (14).

4. Safety switching device (1) according to any of claims 1 to 3, wherein the one-to-one combination of the test waveform is in each case associated with the switching state of the safety switching element (20, 24, 30, 34) that indicates the safe operating mode.

5. Safety switching device (1) according to claim 4, which is designed such that the application of the test waveform to neither of the two input terminals (16, 18) is associated with an operating mode only in conjunction with the application of the test waveform to the additional input terminal (14).

6. Safety switching device (1) according to any of claims 1 to 5, in which the test waveform is pulse-shaped.

## Revendications

1. Dispositif de commutation de sécurité (1), conçu connecter et déconnecter de façon sécurisée un consommateur électrique selon une règle de sécurité, comprenant un certain nombre de bornes d'entrée et de sortie (10, 12, 14, 16, 18) destinées au raccordement des contacts de travail d'un élément de commutation de sécurité (20, 24, 30, 34) et un certain nombre de sorties de commutation (4) destinées à commander l'alimentation en courant du consommateur électrique, chaque élément de commutation de sécurité (20, 24, 30, 34) présentant un état de commutation qui doit être déterminé en fonction de l'utilisation et qui indique un état de fonctionnement sécurisé et un état de commutation qui indique un état de fonctionnement non sécurisé, et le dispositif de commutation de sécurité (1) étant conçu pour fonctionner dans une pluralité de modes de fonctionnement prédéterminés, **caractérisé en ce que** le dispositif de commutation de sécurité (1) est conçu de telle sorte qu'une partie des modes de fonctionnement dans chaque état de commutation de l'élément de commutation de sécurité respectif raccordé est associé à une combinaison biunivoque d'une forme de signal de test prédéterminée appliquée à une pluralité de bornes d'entrée (14, 16, 18), la pluralité des bornes d'entrée (14, 16, 18) comportant deux bornes d'entrée (16, 18) qui sont chacune associées à un circuit de commutation respectif, les deux circuits de commutation agissant de manière redondante sur une sortie de commutation, et l'application de la forme de signal de test à seulement la première des deux bornes d'entrée (18) étant associée à un mode de fonctionnement équivalent, la pluralité de bornes d'entrée (14, 16, 18) comportant une autre borne d'entrée (14), et le dispositif de commutation de sécurité (1) étant conçu de telle sorte que l'application de la forme de signal de test à seulement une des deux bornes d'entrée (16, 18) n'étant associée à un mode de fonctionnement qu'en liaison avec l'application d'une première forme de signal prédéterminée à l'autre borne d'entrée (14).

2. Dispositif de commutation de sécurité (1) selon la revendication 1, dans lequel l'application de la forme de signal de test à seulement la seconde des deux bornes d'entrée (16) est associée à un mode de fonctionnement antivalent.

3. Dispositif de commutation de sécurité (1) selon la revendication 1, qui est conçu de telle sorte que l'application de la forme de signal de test aux deux bornes d'entrée (16, 18) n'est associée à un mode de fonctionnement qu'en liaison avec l'application d'une seconde forme de signal, différente de la première forme de signal, à l'autre borne d'entrée (14).

4. Dispositif de commutation de sécurité (1) selon l'une des revendications 1 à 3, dans lequel la combinaison biunivoque de la forme de signal de test est associée à chaque fois à l'état de commutation, indiquant l'état de fonctionnement sécurisé, de l'élément de commutation de sécurité (20, 24, 30, 34).

5. Dispositif de commutation de sécurité (1) selon la revendication 4, qui est conçu de telle sorte que l'application de la forme de signal de test à aucune des deux bornes d'entrée (16, 18) n'est associée à un mode de fonctionnement qu'en liaison avec l'application de la forme de signal de test à l'autre borne d'entrée (14).

6. Dispositif de commutation de sécurité (1) selon l'une des revendications 1 à 5, dans lequel la forme de signal de test a une forme d'impulsion.
